# FASCICULE DE BREVET EUROPEEN

(11) **EP 3 683 450 B1**
(45) Date de publication et mention de la délivrance du brevet: **01.05.2024**
(21) Numéro de dépôt: 20151422.1
(22) Date de dépôt: 13.01.2020
(51) Int. Cl.: F04D 29/32, F01D 5/30, F01D 11/00, F04D 29/64

(54) **ENSEMBLE ROTATIF DE TURBOMACHINE**
ROTORANORDNUNG EINER STRÖMUNGSMASCHINE
TURBINE ENGINE ROTOR ASSEMBLY

(30) Priorité: 18.01.2019 BE 201905034
(43) Date de publication de la demande: 22.07.2020
(73) Titulaire: Safran Aero Boosters S.A., 4041 Herstal (BE)
(72) Inventeur: HIERNAUX, Stéphane, 4041 Herstal (BE)
(74) Mandataire: Gevers Patents

(56) Documents cités:
- EP-A1- 0 524 876
- EP-A1- 2 806 102
- EP-A2- 2 570 603
- DE-A1-102009 023 840
- US-A- 5 263 823

## Description

### Domaine technique

L'invention concerne un ensemble rotatif de turbomachine. Elle se destine à tout type de turbomachine, terrestre ou aéronautique, et plus particulièrement aux turboréacteurs d'avion.

Plus précisément, l'invention concerne un ensemble rotatif d'une turbomachine du type comprenant un disque aubagé rotatif autour d'un axe A. Ce disque aubagé comprend une jante circulaire ainsi qu'une pluralité d'aubes fixées par leur pied à cette jante et s'étendant radialement vers l'extérieur, à partir de la jante. L'ensemble rotatif comprend en outre une pluralité de plateformes rapportées sur le disque aubagé, s'étendant au niveau des aubes et définissant le profil intérieur de la veine d'écoulement du fluide traversant la soufflante.

Dans la présente demande, l'amont et l'aval sont définis par rapport au sens d'écoulement normal du fluide (de l'amont vers l'aval) à travers la turbomachine. Par ailleurs, la direction axiale correspond à la direction de l'axe de rotation A du disque de la soufflante. La direction radiale est une direction perpendiculaire à l'axe A et la direction circonférentielle est une direction perpendiculaire à la direction axiale et à la direction radiale. Enfin, sauf précision contraire, les adjectifs intérieur et extérieur sont utilisés en référence à une direction radiale de sorte que la partie intérieure (i.e. radialement intérieure) d'un élément est plus proche de l'axe A que la partie extérieure (i.e. radialement extérieure) du même élément.

Il doit être clair que les plateformes concernées par l'invention sont des plateformes "rapportées", c'est-à-dire des plateformes distinctes des autres éléments de l'ensemble rotatif et assemblées à ces autres éléments. En particulier, elles ne font pas partie intégrante des aubes et il ne s'agit donc pas de plateformes dites "intégrées".

### Etat de la technique

Il est connu de l'art antérieur de disposer une pluralité de plateforme entre chaque aube de l'ensemble rotatif. Ces plateformes sont dites « inter-aubes » car elles s'étendent chacune entre deux aubes adjacentes distinctes de l'ensemble rotatif. Ce montage est complexe car chacune de ces plateformes doit être positionnée précisément par rapport aux deux aubes entre lesquelles elle se situe et par rapport à la jante de manière notamment à pouvoir être fixée correctement.

En outre durant le fonctionnement de la turbomachine, ces plateformes vont être soumises à des forces importantes dont la force centrifuge qui va les pousser radialement vers l'extérieur et la pression des fluides s'écoulant dans la turbomachine qui va les pousser axialement. Pour faire face à ces forces et éviter que les plateformes ne se désolidarisent radialement et/ou axialement des disques aubagés, les ensembles de l'art antérieur proposent des systèmes de fixation comprenant des brides boulonnées qui sont complexes à fabriquer et à monter et rendent donc le procédé coûteux.
Le document EP0524876A1 décrit une roue de turbomachine du type comportant un disque, une pluralité d'aubes profilées s'étendant radialement vers l'extérieur à partir de la périphérie dudit disque et dont les pieds sont verrouillés sur ledit disque, et une couronne coaxiale audit disque et indépendante desdites aubes, ladite couronne formant entre lesdites aubes des plateformes délimitant la paroi interne de la veine aérodynamique de circulation des gaz, caractérisée en ce que ladite couronne est constituée d'une virole annulaire réalisée en une seule pièce et présentant des empreintes pour le passage des aubes.

### Résumé de l'invention

L'invention a pour but de proposer un ensemble rotatif du type précité permettant un montage plus simple des plateformes sur le disque aubagé rotatif et un placement plus précis par rapport aux aubes et à la jante.

Pour atteindre ce but, l'invention a pour objet un ensemble rotatif d'une turbomachine comprenant
- un disque aubagé rotatif autour d'un axe A comprenant :
   o une jante ayant une surface de jante s'étendant autour dudit axe A, la jante comprenant un cinquième élément de fixation ;
   o au moins une aube fixée par son pied sur ladite jante et s'étendant radialement vers l'extérieur, à partir de ladite surface de jante ;
- au moins une plateforme rapportée sur ledit disque aubagé, définissant un profil intérieur d'une veine d'écoulement du fluide traversant ladite turbomachine et comprenant un évidement configuré pour permettre l'insertion de ladite plateforme autour de ladite aube ;
- un anneau comprenant un troisième et un quatrième éléments de fixation ;

ledit troisième élément de fixation étant configuré pour maintenir radialement ledit anneau par rapport à ladite jante ;
ledit quatrième élément de fixation étant configuré pour maintenir radialement ladite plateforme par rapport à ladite jante ;
ledit cinquième élément de fixation étant configuré pour coopérer avec le troisième élément de fixation. Le disque aubagé est monobloc.

L'anneau permet ainsi d'améliorer le maintien radial de la plateforme par rapport au disque aubagé. L'anneau ne nécessite pas de moyens de fixation vissés ou soudés pour maintenir les plateformes en position lors de la rotation de l'ensemble rotatif. Il permet par ailleurs une fixation rapide d'une pluralité de plateforme autour de la jante.

Le cinquième élément de fixation est configuré pour maintenir radialement l'anneau par rapport au disque aubagé. Grâce à ce cinquième moyen de fixation dans la jante, le couplage mécanique du troisième moyen de fixation de l'anneau est particulièrement aisée. Le cinquième élément de fixation est intégré à la jante de manière à limiter le nombre de pièces de l'ensemble. Le cinquième élément de fixation est de préférence situé sur un bord amont ou aval de la jante de manière à laisser libre la surface extérieure de la jante.

L'évidement permet de guider chaque plateforme autour d'une aube, simplifiant ainsi son placement sur le disque aubagé, c'est-à-dire son placement par rapport aux aubes et à la jante, tout en améliorant la précision de son placement. En outre, cette fonction de guidage est assurée selon l'invention sans ajout d'éléments supplémentaires sur la plateforme ou sur le disque aubagé.

Selon un aspect de l'invention, l'évidement comprend un fond, venant en butée contre ladite aube de manière à maintenir axialement ladite plateforme par rapport au disque aubagé, de préférence dans la direction d'écoulement du fluide dans la turbomachine. La plateforme peut ainsi être glissée autour de l'aube et venir en butée sur cette dernière par l'intermédiaire de son fond de sorte que l'aube bloque la plateforme axialement. Le système de fixation de l'ensemble rotatif permettant de fixer la plateforme sur le disque aubagé axialement et de préférence selon le sens d'écoulement du fluide est donc simplifié car aucun élément n'est ajouté à la plateforme ou au disque aubagé afin d'assurer cette fonction. L'ensemble rotatif de l'invention a donc l'avantage d'être plus simple à assembler que les ensembles de l'art antérieur du fait que le nombre de pièces reste limité.

Selon un aspect de l'invention, la plateforme comprend une pluralité d'évidements configurés pour permettre l'insertion de ladite plateforme autour d'une pluralité d'aubes. Ainsi, il est possible, grâce à l'invention, d'utiliser une seule plateforme pour une pluralité d'aubes, chacun des évidements s'insérant autour d'une aube distincte. L'ensemble rotatif de l'invention présente donc l'avantage d'être simple à assembler et plus économique que ceux de l'art antérieur du fait de la réduction du nombre de plateformes.

Selon un mode de réalisation de l'invention, la plateforme est en contact avec ladite surface de jante. La combinaison du contact de la plateforme avec la jante et du positionnement de la plateforme autour d'une aube grâce à l'évidement facilite davantage le montage de la plateforme sur le disque car la plateforme est guidée à la fois par l'aube et par la jante sans ajout d'éléments dédiés à cette fonction, ni sur le disque aubagé ni sur la plateforme.

Selon un aspect de l'invention, ladite plateforme comprend un premier élément de fixation configuré pour coopérer avec la jante de manière à maintenir radialement ladite plateforme par rapport à ladite jante. Le premier élément est intégré à la plateforme et permet ainsi de limiter le nombre de pièces de l'ensemble rotatif.

Selon un autre aspect de l'invention, le premier élément de fixation est configuré pour maintenir axialement ladite plateforme par rapport au disque aubagé, de préférence dans la direction d'écoulement du fluide dans la turbomachine. Ce premier élément de fixation permet ainsi de renforcer le maintien axial de la plateforme par rapport au disque aubagé effectué par le fond de l'évidement ou de se substituer à celui-ci dans un mode de réalisation dans lequel l'aube ne viendrait pas en butée contre le fond de l'évidement.

Selon un mode de réalisation de l'invention, ladite jante comprend un deuxième élément de fixation, configuré pour coopérer avec le premier élément de fixation. Ce deuxième élément de fixation permet d'améliorer le maintien radial de la plateforme par rapport au disque aubagé. De la même manière que le premier élément de fixation, le deuxième élément de fixation est intégré à la jante de manière à réduire le nombre de pièces de l'ensemble rotatif. Il est de préférence situé sur un bord amont ou aval de la jante de manière à laisser libre la surface extérieure de la jante.

Avantageusement, le premier élément de fixation est une langue et le deuxième élément de fixation est une gorge.

De préférence, ledit troisième élément de fixation est une première languette d'anneau, ledit quatrième élément de fixation est une deuxième languette d'anneau et ledit cinquième élément de fixation est une deuxième gorge.

Selon un aspect de l'invention, ladite deuxième languette d'anneau est configurée pour recouvrir au moins partiellement ladite plateforme.

Selon un mode de réalisation de l'invention, ladite plateforme comprend un sixième élément de fixation, configuré pour coopérer avec le quatrième élément de fixation. De préférence le sixième élément de fixation est une gorge de plateforme. Alternativement, le sixième élément de fixation est une deuxième langue.

Selon un mode de réalisation de l'invention, ladite plateforme comprend un septième élément de fixation, ledit anneau comprenant en outre un huitième élément de fixation configuré pour coopérer avec le septième élément de fixation de manière à maintenir axialement ladite plateforme par rapport audit disque aubagé, de préférence selon une direction contraire au sens de l'écoulement du fluide dans la turbomachine.

De manière avantageuse, le septième élément de fixation est une saignée et le huitième élément de fixation est une dent d'anneau.

Selon un aspect de l'invention, la plateforme comprend une demi-plateforme amont et une demi-plateforme aval.

Selon un mode de réalisation de l'invention, la demi-plateforme aval et la demi-plateforme amont sont solidarisées entre elles par un système de clips. Avantageusement, le système de clips est intégré dans ladite demi-plateforme aval et demi-plateforme amont et comprend en particulier des éléments de clips dans chacune des demi-plateformes.

De préférence, chaque demi-plateforme comprend un moyen de fixation configuré pour permettre la fixation radiale de la demi-plateforme sur la jante.

Selon un mode de réalisation de l'invention, ledit pied de ladite aube est aminci dans une direction circonférentielle par rapport à un corps principal de l'aube de manière à fournir une surface d'appui radiale à ladite surface supérieure de la plateforme. Ce retrait permet d'améliorer le maintien radial de la plateforme par rapport au disque aubagé sans ajouter de pièces supplémentaires à l'ensemble rotatif de l'invention.

Selon un aspect de l'invention, la plateforme comprend un premier bord latéral et un deuxième bord latéral s'étendant axialement, le premier bord latéral étant destiné à chevaucher le deuxième bord latéral d'une plateforme adjacente. Ce chevauchement entre deux plateformes adjacentes permet de réduire les fuites de fluides entre deux plateformes.

De préférence, la plateforme est obtenue par moulage d'un matériau composite à fibres courtes. L'utilisation de matériau composite à fibre courte permet d'améliorer les propriétés de surface pour diminuer les pertes pariétales. Il permet également d'obtenir une baisse de masse par rapport à une veine aérodynamique interne en métal, le matériau composite étant très léger. Cela permet également de façonner la plateforme plus facilement, notamment par contouring 3D, de manière à améliorer les performances aérodynamiques du disque aubagé et de mieux contrôler la stabilité de l'écoulement des fluides.

Selon un mode de réalisation de l'invention, la plateforme comprend une surface externe radialement non axisymétrique. De préférence, la surface externe comprend des bosses et/ou des creux. De manière avantageuse, la plateforme comprend une ou plusieurs ailette(s) s'étendant radialement vers l'extérieur. Les ailettes sont de préférence constituées de lames métalliques noyées dans la plateforme. La surface externe radialement non symétrique, les bosses et/ou les creux et/ou les ailettes améliorent les performances aérodynamiques du disque aubagé et le contrôle de la stabilité de l'écoulement.

Le disque aubagé est monobloc.

Un principal avantage de l'ensemble rotatif de l'invention lorsque le disque aubagé est monobloc est de permettre une finition de la veine aérodynamique de bonne qualité et avec des temps de fabrication limités. En effet, lors de la fabrication d'un disque aubagé monobloc, l'intégration des aubes sur la jante, lorsqu'il est réalisé par soudage par friction nécessite systématiquement une étape de fraisage et/ou de polissage afin d'éliminer les bourrelets en pied d'aube issus de l'étape de soudage par friction. Cette étape de fraisage et/ou de polissage est compliquée à réaliser en raison de l'encombrement des aubes autour de la zone à fraiser et/ou polir. De cette façon, il est préférable d'avoir recours à un fraisage pouvant être effectué rapidement mais ne permettant pas l'obtention d'un état de surface de jante optimal puis d'ajouter la plateforme selon l'invention. Ainsi un gain de temps considérable est réalisé lors de la fabrication d'un disque aubagé monobloc par un procédé de soudage par friction des aubes sur la jante tout en ayant un bon écoulement d'air dans la veine aérodynamique sans augmentation sensible de la masse de l'ensemble aubagé monobloc.

Il est également envisageable de ne pas réaliser d'usinage des pieds d'aubes lorsque l'ensemble aubagé monobloc présente des bourrelets de soudure en pied d'aube relativement bien contrôlés et de positionner la plateforme directement autour des aubes comprenant lesdits bourrelets de soudure en pieds d'aubes. Dans le cas d'insertion des plateformes autour des pieds d'aubes comprenant des bourrelets de soudure, des chanfreins ou des rainures au niveau de la surface inférieur de la plateforme et de l'évidement sont envisagés de sorte à permettre le positionnement de la plateforme autour des pieds d'aubes comprenant des bourrelets de soudure.

Par ailleurs, l'on remarque que selon l'invention, la surface de jante ne comprend pas d'éléments de fixation. Cet aspect de l'invention est particulièrement avantageux pour un disque aubagé monobloc. En effet, pour permettre le montage des aubes par friction sur la jante, cette dernière ne peut pas comprendre d'éléments d'amélioration de performances aérodynamiques ni d'éléments de fixation permettant le maintien des plateformes rapportés. En outre, une fois le disque monobloc constitué, il est compliqué de modifier la surface de jante située entres les aubes en particulier car l'espace y est réduit. Ainsi, l'assemblage d'une plateforme selon l'invention permet de résoudre ces problèmes puisque les éléments de fixation ne sont pas situés sur la surface extérieure de la jante et que la surface extérieure de la plateforme peut être travaillée préalablement pour améliorer les performances aérodynamiques de la veine intérieure.

L'invention concerne également un compresseur de turbomachine comprenant un rotor comprenant l'ensemble rotatif tel que décrit précédemment. Brève description des figures

Ces aspects ainsi que d'autres aspects de l'invention seront clarifiés dans la description détaillée de modes de réalisation particuliers de l'invention, référence étant faite aux dessins des figures, dans lesquelles :
- la Fig.1 est une vue schématique en perspective d'un ensemble rotatif selon l'invention ;
- la Fig.2 est une vue schématique partielle en perspective éclatée d'un ensemble rotatif selon l'invention ;
- les Fig.3a, 3b et 3c sont des vues schématiques partielles en coupes selon un plan comprenant l'axe A représentant des modes de réalisations différents d'un ensemble rotatif selon l'invention ;
- la Fig.4a est une vue schématique en perspective d'un exemple de réalisation d'une plateforme selon l'invention ;
- la Fig.4b est une vue en coupe d'une plateforme de l'invention selon le plan IVb de la figure 4a;
- la Fig.5 est une vue similaire à la figure 4b illustrant une plateforme assemblée sur un disque aubagé selon un mode de réalisation de l'invention ;
- les Fig.6a et 6b sont des vues schématiques en perspective d'exemples de réalisation de plateforme selon l'invention ;
- la Fig.7a représente une vue schématique en coupe d'un exemple de réalisation de plateforme ne faisant pas partie de la présente invention ;
- La Fig. 7b représente une vue schématique partielle en coupe selon un plan comprenant l'axe A de la plateforme de la Fig. 7a assemblée sur un disque aubagé ; et
- la Fig. 7c représente en vue schématique partielle de haut, un exemple de réalisation d'un ensemble rotatif ne faisant pas partie de la présente invention.

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

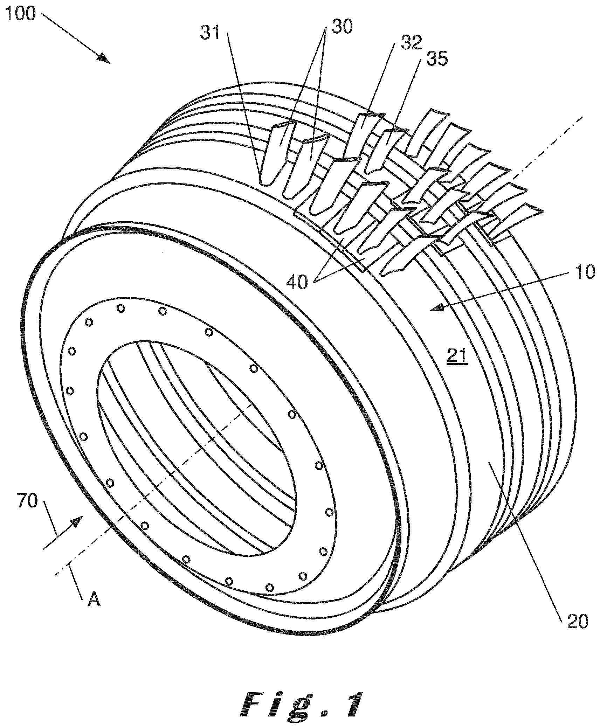

La figure 1 montre un ensemble rotatif 100 d'une turbomachine selon l'invention.

L'ensemble rotatif 100 comprend un disque aubagé 10 rotatif autour d'un axe A. L'axe A est centré par rapport au disque aubagé 10 et s'étend sensiblement parallèlement à un sens 70 d'écoulement du fluide dans la turbomachine.

Le disque aubagé 10 comprend une jante 20 circulaire s'étendant autour de l'axe A. La jante 20 comprend notamment une surface de jante 21 située radialement vers l'extérieur.

Le disque aubagé 10 comprend notamment une aube et en particulier une pluralité d'aubes 30. Chacune des aubes 30 comprend un pied 31 par lequel elles sont fixées sur la jante 20 et notamment sur la surface de jante 21. Les aubes 30 comprennent un corps principal 35 s'étendant radialement vers l'extérieur, à partir de la surface de jante 21. Le corps principal 35 comprend des parois latérales 32 destinées à être en contact avec le fluide s'écoulant dans la turbomachine.

Les aubes 30 sont fixées ici sur les jantes 20 par soudage et en particulier par friction. Le disque aubagé 10 représenté ici est donc un disque monobloc selon l'invention.

L'ensemble rotatif 100 de l'invention comprend également au moins une plateforme 40 rapportée sur le disque aubagé. Cette plateforme 40 est par exemple obtenue par moulage d'un matériau composite, en particulier à fibres courtes.

Dans l'exemple illustré à la figure 1, l'ensemble rotatif 100 comprend une pluralité de plateformes 40. Ces plateformes 40 sont assemblées au disque aubagé 10 de manière à définir un profil intérieur d'une veine d'écoulement du fluide traversant la turbomachine. Les plateformes 40 sont assemblées extérieurement par rapport à la surface de jante 21, autour de l'axe A et de préférence essentiellement parallèlement au sens 70 d'écoulement des fluides traversant la turbomachine.

L'ensemble rotatif 100 illustré à la figure 1 comprend trois disques aubagés disposés les uns à la suite des autres selon la direction axiale mais il pourrait également en comprendre un, deux ou plus de trois sans sortir du cadre de l'invention.

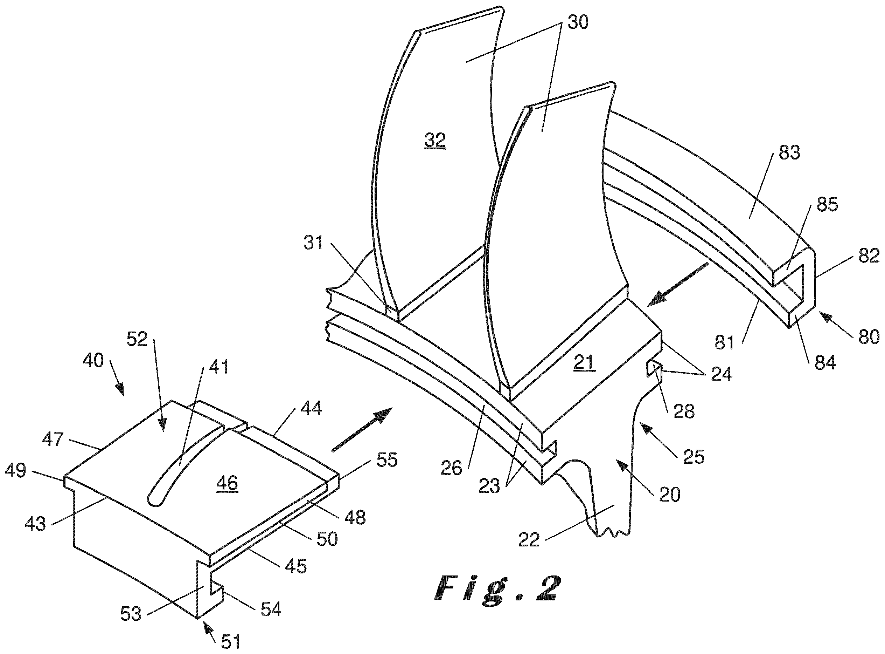

La figure 2 montre le disque aubagé de la figure 1 en vue partielle éclatée. Cette figure permet de mieux illustrer la plateforme 40 de l'invention comprenant au moins un évidement 41 configuré pour permettre l'insertion de la plateforme autour d'une des aubes 30. L'évidement 41 est configuré pour épouser la forme des parois latérales 32 de l'aube 30. Ainsi, il est particulièrement facile de positionner la plateforme 40 sur l'aube 30, l'insertion étant notamment guidée par la forme de l'évidement 41 épousant celle de l'aube 30.

La plateforme 40 comprend un corps principal 52 comprenant un côté amont 43, un côté aval 44, un côté intérieur 45, un côté supérieur ou surface supérieur 46, un premier côté latéral 47 comprenant un premier bord latéral 49 et un côté deuxième côté latéral 48 comprenant un deuxième bord latéral 50. Le premier 47 et le deuxième bord 48 latéraux relient entre eux les côtés amont 43 et aval 44.

Le côté inférieur 45 est destiné à être en contact sur essentiellement toute sa surface avec la surface de jante 21. Ce contact entre la plateforme 40 et la jante 20 permet d'améliorer la liaison mécanique entre la plateforme et la jante. Le côté supérieur 46, opposé au côté inférieur 45, définit quant à lui la veine d'écoulement du fluide traversant la turbomachine.

L'évidement 41 traverse de part et d'autre la plateforme 40 du côté supérieur 46 jusqu'au côté inférieur 45. L'évidement 41 commence ici du côté aval 44 et continue vers le côté amont 43 sans néanmoins l'atteindre. Il se termine par un fond 42. Le fond 42 permet d'agir comme butée contre l'aube 30 une fois la plateforme 40 assemblée sur le disque aubagé. Le fond 42 permet ainsi de maintenir la plateforme 40 sur le disque aubagé selon une direction axiale, notamment dans le sens 70 d'écoulement des fluides.

La plateforme 40 comprend en outre un premier élément de fixation 51 configuré pour coopérer avec la jante 20 de manière à maintenir radialement la plateforme 40 par rapport à la jante 20. Il s'étend notamment du premier côté latérale 47 jusqu'au deuxième côté latérale 48 de la plateforme 40 de manière à améliorer la coopération avec la jante 20.

Le premier élément de fixation 51 est ici une langue 51. Cette langue 51 est en particulier en forme de L s'étendant à partir du côté amont 43. La langue 51 comprend une première partie 53 liée au côté amont 43 et s'étendant vers l'intérieur, sensiblement perpendiculairement au côté inférieur 45, c'est-à-dire sensiblement perpendiculairement à l'axe A. La langue 51 comprend également une deuxième partie 54 prolongeant la première partie 53 sensiblement parallèlement au côté intérieur 45, c'est-à-dire sensiblement perpendiculairement par rapport à la première partie 53. La langue 51 forme ainsi un crochet configuré pour coopérer avec la jante 20.

La surface extérieure 21 de la jante 20 est située sur un côté extérieur de la jante 20. Cette dernière comprend également, un côté amont 23, un côté aval 24 et un côté inférieur 25. Elle comprend un pied 22 qui s'étend vers l'intérieur à partir du côté intérieur 25.

La jante 20 comprend un deuxième élément de fixation 26 configuré pour coopérer avec la plateforme 40 et en particulier avec le premier élément de fixation 51 de manière à maintenir radialement la plateforme 40 par rapport à la jante 20. Le deuxième élément de fixation 26 est situé ici au niveau du côté amont 23 de la jante 20. Il s'agit en particulier d'une gorge 26, notamment usinée dans la jante 20. La gorge 26 s'étend par exemple de manière continue tout le long de de la jante 20 de manière à former une gorge continue circulaire. Les plateformes 40 peuvent ainsi être insérées autour des aubes sans tenir compte de leur positionnement circulaire vis-à-vis de la jante. Ainsi, les aubes peuvent également être positionnées sur la jante indépendamment de leur position circulaire.

Lors de l'insertion de la plateforme 40 autour d'une aube 30, la langue 51 de la plateforme 40 vient s'engager dans la gorge 26 de la jante 20 de manière à maintenir radialement la plateforme 40 par rapport à la jante 20.

On peut également noter que le premier élément de fixation 51 est configuré, en particulier par l'intermédiaire de la première partie 53 de la langue 51, pour maintenir axialement la plateforme 40 sur le disque aubagé, notamment sur la jante 20, et de manière avantageuse selon le sens d'écoulement du fluide.

L'ensemble rotatif de l'invention peut comprendre, comme illustré à la figure 2, un anneau 80 en particulier centré sur l'axe A. L'anneau 80 est par exemple constitué en matériau composite, notamment à fibre courte et en particulier identique au matériau constituant la plateforme 40. L'anneau 80 est ici en forme de U selon une coupe dans un plan comprenant l'axe A de sorte qu'il comprend un côté inférieur 81, un côté aval 82 et un côté supérieur 83. Cet anneau 80 comprend un troisième et un quatrième éléments de fixation 84, 85.

Le troisième élément de fixation 84 est configuré pour maintenir l'anneau radialement par rapport à la jante 20. Il est situé ici sur le côté inférieur 81 de l'anneau 80 et se présente en particulier sous forme d'une première languette d'anneau 84 s'étendant notamment sensiblement parallèlement au côté inférieur 25 de la jante 20.

Le quatrième élément de fixation 85 est configuré pour maintenir radialement la plateforme 40 par rapport à la jante 20. Le quatrième élément de fixation 85 est situé ici sur le côté supérieur 83 de l'anneau 80 et se présente en particulier sous la forme d'une deuxième languette d'anneau 85 s'étendant notamment sensiblement parallèlement au côté supérieur 45 de la plateforme, c'est-à-dire sensiblement parallèlement à ladite deuxième languette d'anneau 85.

La jante 20 comprend en outre un cinquième élément de fixation 28 configuré pour coopérer avec le troisième élément de fixation 84 de l'anneau 80. Ce cinquième élément de fixation 28 est situé ici du côté aval 24 de la jante 20 et est en particulier une deuxième gorge 28. La deuxième gorge 28 peut être identique à la première gorge 26. Elle est en particulier usinée dans la jante 20.

La deuxième gorge 28 est configurée pour recevoir la première languette d'anneau 84. Ainsi, lors de l'insertion de l'anneau 80 sur le disque aubagé, la première languette d'anneau 84 vient s'engager dans la deuxième gorge 28 de la jante 20 de manière à maintenir radialement l'anneau 80 par rapport à la jante 20. Lors de cette même insertion, la deuxième languette d'anneau 85 va solidariser radialement la plateforme 40 sur la jante 20 en chevauchant une partie de la plateforme 40 située ici du côté amont 44 de la plateforme 40.

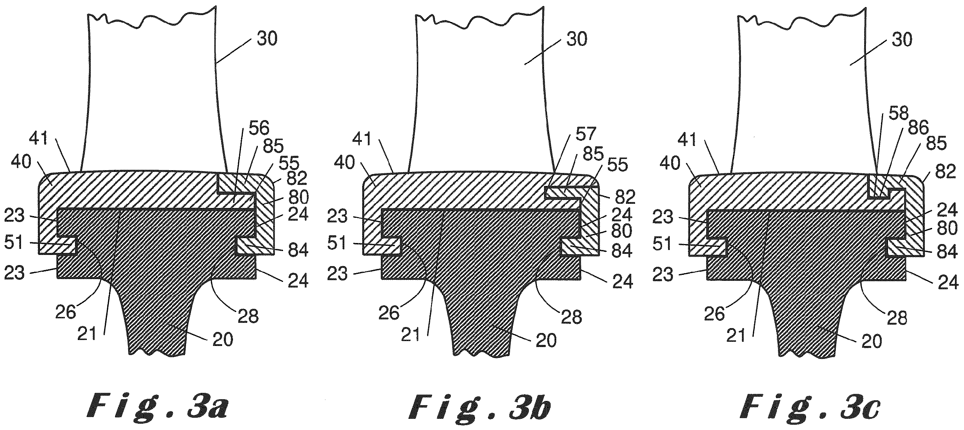

Des variantes de coopération entre l'anneau 80 et la plateforme 40 sont illustrées sur les figures 3a, 3b et 3c. Dans les modes de réalisation de l'invention illustrés sur ces figures, la plateforme 40 comprend un sixième élément de fixation 55 situé ici sur le côté aval 44 de la plateforme 40. Il s'étend notamment du premier côté latéral jusqu'au deuxième côté latéral de la plateforme 40 de manière à améliorer la coopération avec l'anneau 80.

Sur la figure 3a, le sixième élément de fixation 55 est une deuxième langue 56. Cette deuxième langue 56 s'étend au niveau du côté aval 44 de la plateforme 40 notamment sensiblement parallèlement au côté supérieur 46. La deuxième languette d'anneau 85 est configurée pour recouvrir cette deuxième langue 56 de manière à maintenir radialement la plateforme 40 par rapport à la jante 20.

Sur la figure 3c, la plateforme 40 comprend un septième élément de fixation 58, ici une saignée 58, situé en particulier sur le côté aval 44 de la plateforme 40. La saignée 58 est par exemple effectuée dans la deuxième langue 56.

Dans ce mode de réalisation, l'anneau 80 comprend en outre un huitième élément de fixation 86, en particulier une dent 86 s'étendant de préférence depuis le premier côté latéral jusqu'au deuxième côté latéral de la plateforme. La saignée 58 est ainsi configurée pour recevoir la dent 86 de manière à maintenir axialement la plateforme 40 par rapport à la jante, en particulier dans les deux sens de la direction axiale et en particulier selon un sens contraire au sens 70 de l'écoulement du fluide dans la turbomachine. Avantageusement, la plateforme 40 et/ou l'anneau 80 est constituée d'un matériau suffisamment souple pour permettre l'insertion de la dent 86 dans la saignée 58, de préférence la plateforme 40 et/ou l'anneau 80 est constituée d'un matériau composite.

La figure 3b représente une variante de réalisation de l'invention dans laquelle le sixième élément de fixation 55 est une troisième gorge 57 similaire à la première et à la deuxième gorge 26, 28. Elle est par exemple usinée dans la plateforme 40. Lors de l'assemblage de la plateforme sur le disque aubagé, la deuxième languette d'anneau 85 est insérée dans la troisième gorge 57 de manière à maintenir radialement la plateforme 40 par rapport à la jante 20. Le septième élément de fixation 58 peut être situé dans la troisième gorge 57. Ce mode de réalisation permet d'avoir un profil intérieur d'une veine d'écoulement du fluide traversant la turbomachine sans jonctions entre portions de plateforme 40. Ce mode de réalisation permet d'avoir un bon maintien radial grâce à la troisième gorge 57 dans (l'épaisseur de) la plateforme 40 dans laquelle vient s'insérer la deuxième languette d'anneau 85.

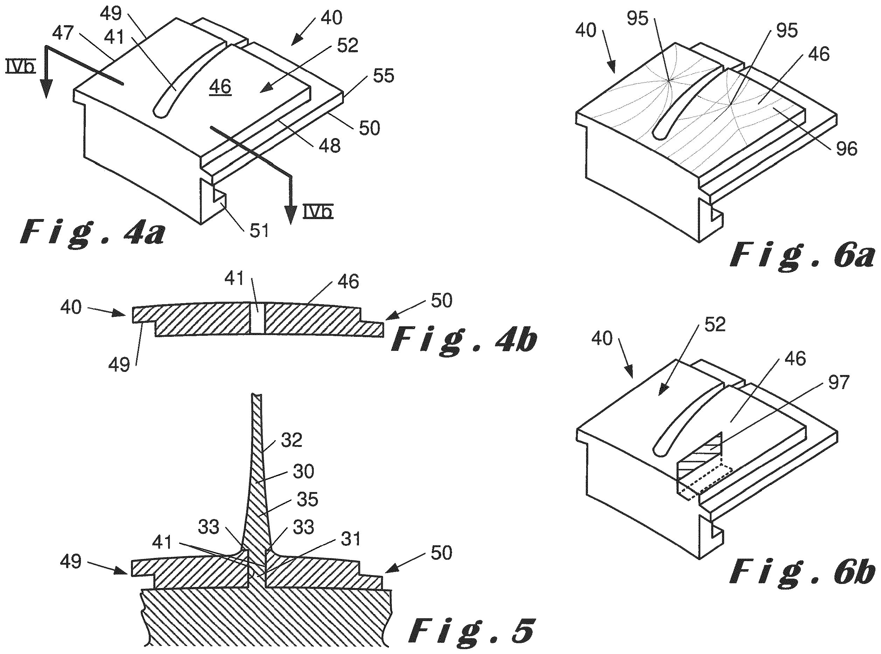

Les figures 4a et 4b permettent d'illustrer un mode de réalisation dans lequel la plateforme 40 comprend le premier bord latéral 49 et le deuxième bord latéral 50 s'étendant essentiellement parallèlement au corps principal 52 de la plateforme 40. Le premier bord latéral 49 est situé au niveau du premier côté latéral 47 et s'étend du côté aval jusqu'au côté amont. Le deuxième bord latéral 50 est situé au niveau du deuxième côté latéral 47 et s'étend du côté aval jusqu'au côté amont.

Le premier bord latéral 49 se présente ici sous la forme d'une languette supérieure 49 tandis que le deuxième bord latéral 50 se présente sous la forme d'une languette inférieure 50 de sorte que la languette supérieure 49 d'une plateforme 40 vient chevaucher la languette inférieure 50 de la plateforme adjacente.

La figure 5 illustre un aspect de l'invention selon lequel le pied 31 de l'aube 30 est aminci dans la direction circonférentielle par rapport au corps principal de l'aube 35. L'aube comprend alors une surface d'appui radial 33 pour la surface supérieure 46 de la plateforme 40. Cette surface d'appui radial est avantageusement située de part et d'autre de l'aube 30 dans la direction circonférentielle. Elle s'étend notamment sur toute la dimension axiale de l'aube.

Les figures 6a et 6b représentent des modes de réalisation dans lesquelles le côté supérieure 46 de la plateforme 40 n'est pas axisymétrique.

Sur la figure 6a, la surface supérieure 46 de la plateforme 40 comprend en effet des bosses 95 et des creux 96.

Sur la figure 6b, la plateforme comprend des ailettes 97, noyées dans le corps principal 52 et faisant saillies au niveau du côté supérieur 46 de la plateforme 40. Ces ailettes 97 sont par exemple en métal. Elles sont disposées de manière à améliorer les performances aérodynamiques du disque aubagé et le contrôle de la stabilité de l'écoulement du fluide dans la turbomachine.

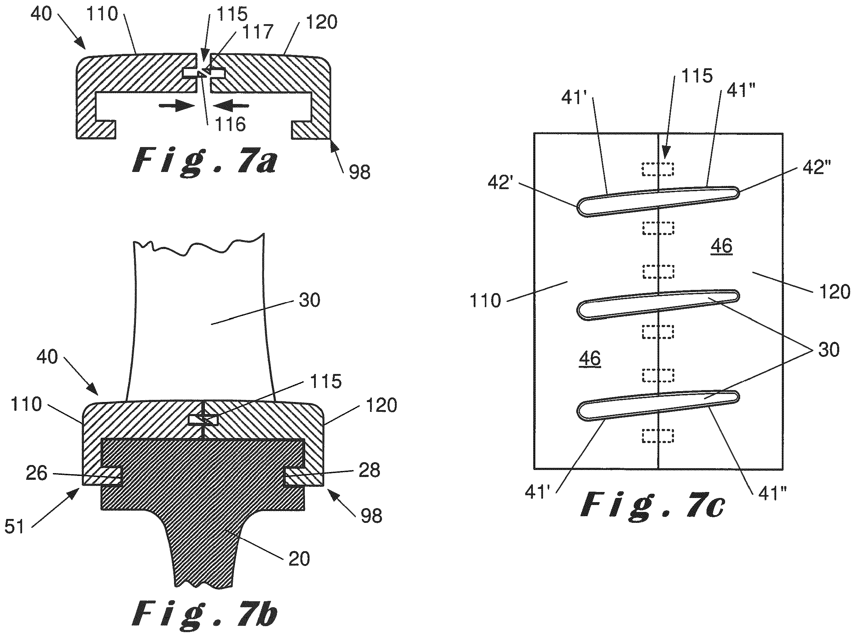

Les figures 7a, 7b et 7c illustrent un exemple ne faisant pas partie de la présente invention selon lequel la plateforme 40 comprend une demi-plateforme amont 110 et une demi-plateforme aval 120.

Dans cet exemple, l'ensemble rotatif 100 ne comprend pas d'anneau. Cependant toutes les caractéristiques décrites en rapport aux autres éléments de l'invention sont également applicables à ce mode de réalisation.

La demi-plateforme aval 112 est située dans le prolongement axial de la demi-plateforme amont 110. Elles sont solidarisées entre elles par un système de clips 115 intégré à chacune des demi-plateformes 110, 120.

Ce système de clips 115 comprend un premier clip 116, par exemple situé sur la demi-plateforme amont 110 et un deuxième clip 117, par exemple situé sur la demi-plateforme aval 120. Les premier et deuxième clips 116, 117 sont configurés pour venir en prise entre eux lors de l'assemblage de la demi-plateforme amont 110 avec la demi-plateforme aval 120.

Dans cet exemple les deux demi-plateformes 110, 120 comprennent chacun un demi-évidement 41', 41" de manière à pouvoir se glisser de part et d'autre des aubes 30 et être assemblées par translation. Le demi-évidement 41' d'une demi-plateforme amont 110 est complémentaire de celui 41" d'une demi-plateforme aval 120 de sorte que lorsque les demi-plateformes amont 110 et aval 120 sont assemblées, le demi-évidement 41' de la demi-plateforme amont 110 et celui 41" de la demi-plateforme aval 120 forment un évidement 41 continu entourant l'aube 30.

Chacun des demi-évidements 41', 41" peut comprendre un fond 42', 42" destiné à venir en butée contre l'aube 30. Les deux demi-évidements 42', 42" permettent ainsi de maintenir la plateforme 30 axialement dans le sens d'écoulement du fluide dans la turbomachine et dans le sens contraire.

La demi-plateforme amont 110 comprend le premier élément de fixation 51 destiné à coopérer avec le deuxième élément de fixation 26 de la jante 20. La demi-plateforme aval 120 comprend un neuvième élément de fixation 98, ici identique au premier élément de fixation 51, et destiné à coopérer avec le cinquième élément de fixation 28 de la jante 20.

L'exemple de la figure 7c montre un exemple dans lequel la plateforme 40 comprend une pluralité d'évidements 41. Ce mode de réalisation est particulièrement avantageux du fait qu'il limite le nombre de plateformes nécessaires à fabriquer puis à monter sur le disque aubagé. Il est illustré ici en relation avec une plateforme comprenant une demi-plateforme amont 110 et une demi-plateforme aval 120 mais il n'est pas limité à cet exemple et pourrait être appliqué à un mode de réalisation selon invention, dans lequel la plateforme ne comprend pas de demi-plateforme, comme par exemple dans les modes de réalisations illustrés aux figures 1 à 6b.

L'invention concerne aussi un compresseur de turbomachine comprenant un rotor constitué de l'ensemble rotatif selon l'un des modes de réalisation présenté précédemment.

La présente invention a été décrite en relation avec des modes de réalisations spécifiques, qui ont une valeur purement illustratives et ne doivent pas être considérées comme limitatives. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Ensemble rotatif (100) d'une turbomachine comprenant :
- un disque aubagé (10) rotatif autour d'un axe (A) comprenant :
o une jante (20) ayant une surface de jante (21) s'étendant autour dudit axe (A), ladite jante (20) comprenant un cinquième élément de fixation (28) ;
o au moins une aube (30) fixée par son pied (31) sur ladite jante (20) et s'étendant radialement vers l'extérieur, à partir de ladite surface de jante (21) ;
- au moins une plateforme (40) rapportée sur ledit disque aubagé (10), définissant un profil intérieur d'une veine pour un écoulement de fluide au travers de ladite turbomachine et comprenant un évidement (41) configuré pour permettre l'insertion de ladite plateforme (40) autour de ladite aube (30) ;
- un anneau (80) comprenant un troisième et un quatrième éléments de fixation (84, 85) ;
ledit troisième élément de fixation (84) étant configuré pour maintenir radialement ledit anneau (80) par rapport à ladite jante (20) ;
ledit quatrième élément de fixation (85) étant configuré pour maintenir radialement ladite plateforme (40) par rapport à ladite jante (20) ;
ledit cinquième élément de fixation (28) étant configuré pour coopérer avec ledit troisième élément de fixation (84),
**caractérisé en ce que** le disque aubagé (10) est monobloc.

2. Ensemble rotatif (100) selon la revendication 1, **caractérisé en ce que** l'anneau (80) est en forme de U selon une coupe dans un plan comprenant l'axe (A) de sorte qu'il comprend un côté inférieur (81), un côté aval (82) et un côté supérieur (83).

3. Ensemble rotatif (100) selon la revendication 1 ou 2, **caractérisé en ce que** l'évidement (41) comprend un fond (42), venant en butée contre ladite aube (30) de manière à maintenir axialement ladite plateforme (40) par rapport au disque aubagé (10).

4. Ensemble rotatif (100) selon l'une quelconque des revendications 1 à 3, **caractérisé en ce que** la plateforme comprend une pluralité d'évidements configurés pour permettre l'insertion de ladite plateforme (40) autour d'une pluralité d'aubes (30).

5. Ensemble rotatif (100) selon l'une quelconque des revendications précédentes, **caractérisé en ce que** ladite plateforme (40) comprend un premier élément de fixation (51) configuré pour coopérer avec la jante (20) de manière à maintenir radialement ladite plateforme (40) par rapport à ladite jante (20).

6. Ensemble rotatif (100) selon la revendication 5, **caractérisé en ce que** le premier élément de fixation (51) est configuré pour maintenir axialement ladite plateforme (40) par rapport au disque aubagé (10).

7. Ensemble rotatif (100) selon la revendication 5 ou 6, dans lequel ladite jante (20) comprend un deuxième élément de fixation (26), configuré pour coopérer avec le premier élément de fixation (51).

8. Ensemble rotatif (100) selon l'une quelconque des revendications précédentes, **caractérisé en ce que** ladite plateforme (40) comprend un sixième élément de fixation (55), configuré pour coopérer avec le quatrième élément de fixation (85).

9. Ensemble rotatif (100) selon l'une quelconque des revendications précédentes, caractérisé en que :
- ladite plateforme (40) comprend un septième élément de fixation (58) et en ce que,
- ledit anneau (80) comprend en outre un huitième élément de fixation (86), configuré pour coopérer avec le septième élément de fixation (58) de manière à maintenir axialement ladite plateforme (40) par rapport audit disque aubagé (10).

10. Ensemble rotatif (100) selon l'une quelconque des revendications précédentes **caractérisé en ce que** ledit pied (31) de ladite aube (30) est aminci dans une direction circonférentielle par rapport à un corps principal de l'aube (30) de manière à fournir une surface d'appui radiale (33) pour une surface supérieure (46) de la plateforme (40).

11. Ensemble rotatif (100) selon l'une quelconque des revendications précédentes **caractérisé en ce que** la plateforme (40) comprend un premier bord latéral (49) et un deuxième bord latéral (50) s'étendant essentiellement axialement, le premier bord latéral (49) étant destiné à chevaucher le deuxième bord latéral (50) d'une plateforme (40) adjacente.

12. Ensemble rotatif (100) selon l'une quelconque des revendications précédentes **caractérisé en ce que** la plateforme (40) comprend une surface externe (46) radialement non axisymétrique.

13. Ensemble rotatif (100) selon la revendication précédente **caractérisé en ce que** la plateforme (40) comprend une ou plusieurs ailette(s) (97) s'étendant radialement vers l'extérieur.

14. Compresseur de turbomachine comprenant un rotor comprenant l'ensemble rotatif (100) selon l'une quelconque des revendications précédente.

## Patentansprüche

1. Drehanordnung (100) einer Turbomaschine umfassend:
- eine beschaufelte Scheibe (10), die um eine Achse (A) drehbar ist, umfassend:
- eine Felge (20), der eine sich um die Achse (A) erstreckende Felgeoberfläche (21) aufweist, wobei die Felge (20) ein fünftes Befestigungselement (28) umfasst;
- mindestens eine Schaufel (30), die durch ihren Fuß (31) an der Flege (20) befestigt ist und sich von der Felgeoberfläche (21) aus radial nach außen erstreckt;
- mindestens eine Plattform (40), die an der beschaufelten Scheibe (10) angebracht ist, die ein Innenprofil eines Stroms für eine Fluidströmung durch die Turbomaschine definiert und eine Aussparung (41) umfasst, die dazu konfiguriert ist, das Einsetzen der Plattform (40) um die Schaufel (30) herum zu ermöglichen;
- einen Ring (80), der ein drittes und ein viertes Befestigungselement (84, 85) umfasst;
wobei das dritte Befestigungselement (84) dazu konfiguriert ist, den Ring (80) in Bezug auf der Felge (20) radial zu halten;
wobei das vierte Befestigungselement (85) dazu konfiguriert ist, die Plattform (40) in Bezug auf der Felge (20) radial zu halten;
wobei das fünfte Befestigungselement (28) dazu konfiguriert ist, mit dem dritten Befestigungselement (84) zusammenzuwirken, **dadurch gekennzeichnet, dass** die beschaufelte Scheibe (10) einstückig ist.

2. Drehanordnung (100) nach Anspruch 1, **dadurch gekennzeichnet, dass** der Ring (80) im Schnitt in einer die Achse (A) umfassenden Ebene U-förmig ist, so dass er eine Unterseite (81), eine stromabwärtige Seite (82) und eine Oberseite (83) umfasst.

3. Drehanordnung (100) nach Anspruch 1 oder 2, **dadurch gekennzeichnet, dass** die Aussparung (41) einen Boden (42) umfasst, der gegen die Schaufel (30) in Anschlag kommt, so dass die Plattform (40) axial in Bezug auf die beschaufelte Scheibe (10) gehalten wird.

4. Drehanordnung (100) nach einem der Ansprüche 1 bis 3, **dadurch gekennzeichnet, dass** die Plattform eine Vielzahl von Aussparungen umfasst, die dazu konfiguriert sind, das Einsetzen der Plattform (40) um eine Vielzahl von Schaufeln (30) herum zu ermöglichen.

5. Drehanordnung (100) nach einem der vorstehenden Ansprüche, **dadurch gekennzeichnet, dass** die Plattform (40) ein erstes Befestigungselement (51) umfasst, das dazu konfiguriert ist, mit der Felge (20) zusammenzuwirken, um die Plattform (40) in Bezug auf der Felge (20) radial zu halten.

6. Drehanordnung (100) nach Anspruch 5, **dadurch gekennzeichnet, dass** das erste Befestigungselement (51) dazu konfiguriert ist, die Plattform (40) in Bezug auf die beschaufelte Scheibe (10) axial zu halten.

7. Drehanordnung (100) nach Anspruch 5 oder 6, wobei die Felge (20) ein zweites Befestigungselement (26) umfasst, das dazu konfiguriert ist, mit dem ersten Befestigungselement (51) zusammenzuwirken.

8. Drehanordnung (100) nach einem der vorstehenden Ansprüche, **dadurch gekennzeichnet, dass** die Plattform (40) ein sechstes Befestigungselement (55) umfasst, das dazu konfiguriert ist, mit dem vierten Befestigungselement (85) zusammenzuwirken.

9. Drehanordnung (100) nach einem der vorstehenden Ansprüche, **dadurch gekennzeichnet, dass**:
- die Plattform (40) ein siebtes Befestigungselement (58) umfasst und dass,
- der Ring (80) weiter ein achtes Befestigungselement (86) umfasst, das dazu konfiguriert ist, mit dem siebten Befestigungselement (58) zusammenzuwirken, um die Plattform (40) in Bezug auf die beschaufelte Scheibe (10) axial zu halten.

10. Drehanordnung (100) nach einem der vorstehenden Ansprüche, **dadurch gekennzeichnet, dass** der Fuß (31) der Schaufel (30) in einer Umfangsrichtung in Bezug auf einen Hauptkörper der Schaufel (30) verjüngt ist, um eine radiale Auflagefläche (33) für eine obere Oberfläche (46) der Plattform (40) bereitzustellen.

11. Drehanordnung (100) nach einem der vorstehenden Ansprüche, **dadurch gekennzeichnet, dass** die Plattform (40) einen ersten Seitenrand (49) und einen zweiten Seitenrand (50) umfasst, die sich im Wesentlichen axial erstrecken, wobei der erste Seitenrand (49) dazu bestimmt ist, den zweiten Seitenrand (50) einer angrenzenden Plattform (40) zu überlappen.

12. Drehanordnung (100) nach einem der vorstehenden Ansprüche, **dadurch gekennzeichnet, dass** die Plattform (40) eine radial nicht achsensymmetrische äußere Oberfläche (46) umfasst.

13. Drehanordnung (100) nach dem vorstehenden Anspruch, **dadurch gekennzeichnet, dass** die Plattform (40) einen oder mehrere Flügel (97) umfasst, die sich radial nach außen erstrecken.

14. Turbomaschinenverdichter, der einen Rotor umfasst, der die Drehanordnung (100) nach einem der vorstehenden Ansprüche umfasst.

## Claims

1. Rotor assembly (100) of a turbine engine, comprising:
- a bladed disk (10), rotary about an axis (A) comprising:
- a rim (20) having a rim surface (21) extending about said axis (A), said rim (20) comprising a fifth fixing element (28);
- at least one blade (30) fixed by its root (31) on said rim (20) and extending radially outwards, from said rim surface (21);
- at least one platform (40) added to said bladed disk (10), defining an inner profile of a flow for a flowing of fluid through said turbine engine and comprising a recess (41) configured to enable the insertion of said platform (40) around said blade (30);
- a ring (80) comprising a third and a fourth fixing element (84, 85);
said third fixing element (84) being configured to radially hold said ring (80) with respect to said rim (20);
said fourth fixing element (85) being configured to radially hold said platform (40) with respect to said rim (20);
said fifth fixing element (28) being configured to engage with said third fixing element (84), **characterised in that** the bladed disk (10) is one-piece.

2. Rotor assembly (100) according to claim 1, **characterized in that** the ring (80) is U-shaped along a cut in a plane comprising the axis (A), such that it comprises a lower side (81), a downstream side (82) and an upper side (83).

3. Rotor assembly (100) according to claim 1 or 2, **characterized in that** the recess (41) comprises a bottom (42), abutting against said blade (30), so as to axially hold said platform (40) with respect to the bladed disk (10).

4. Rotor assembly (100) according to any one of claims 1 to 3, **characterized in that** the platform comprises a plurality of recesses configured to enable the insertion of said platform (40) around a plurality of blades (30).

5. Rotor assembly (100) according to any one of the preceding claims, **characterized in that** said platform (40) comprises a first fixing element (51), configured to engage with the rim (20), so as to radially hold said platform (40) with respect to said rim (20).

6. Rotor assembly (100) according to claim 5, **characterized in that** the first fixing element (51) is configured to axially hold said platform (40) with respect to the bladed disk (10).

7. Rotor assembly (100) according to claim 5 or 6, wherein said rim (20) comprises a second fixing element (26), configured to engage with the first fixing element (51).

8. Rotor assembly (100) according to any one of the preceding claims, **characterized in that** said platform (40) comprises a sixth fixing element (55), configured to engage with the fourth fixing element (85).

9. Rotor assembly (100) according to any one of the preceding claims, **characterized in that**:
- said platform (40) comprises a seventh fixing element (58), and **in that**,
- said ring (80) further comprises an eighth fixing element (86), configured to engage with the seventh fixing element (58), so as to axially hold said platform (40) with respect to said bladed disk (10).

10. Rotor assembly (100) according to any one of the preceding claims, **characterized in that** said root (31) of said blade (30) is thinned in a circumferential direction with respect to a main body of the blade (30), so as to provide a radial bearing surface (33) for an upper surface (46) of the platform (40).

11. Rotor assembly (100) according to any one of the preceding claims, **characterized in that** the platform (40) comprises a first side edge (49) and a second side edge (50) extending mainly axially, the first side edge (49) being intended to overlap the second side edge (50) of an adjacent platform (40).

12. Rotor assembly (100) according to any one of the preceding claims, **characterized in that** the platform (40) comprises a radially non-axisymmetrical external surface (46).

13. Rotor assembly (100) according to the preceding claim, **characterized in that** the platform (40) comprises one or more fin(s) (97) extending radially outwards.

14. Turbine engine compressor comprising a rotor comprising the rotor assembly (100) according to any one of the preceding claims.
